# EUROPEAN PATENT APPLICATION

(11) **EP 1 845 674 A1**
(43) Date of publication of application: **17.10.2007**
(21) Application number: 06252051.5
(22) Date of filing: 12.04.2006
(51) Int. Cl.: H04L 12/58

(54) **Messaging service**

(71) Applicant: BRITISH TELECOMMUNICATIONS public limited company, London EC1A 7AJ (GB)
(72) Inventor: The designation of the inventor has not yet been filed
(74) Representative: Lidbetter, Timothy Guy Edwin

(57) **Abstract**

In the present invention, a text messaging system 33 is arranged to withhold delivery messages stored therein unless the destination handset 12 is registered with a specified subset of locations. For example, it may be configured to only deliver alert messages when the handset 12 is connected to the internet 8. However, a user may elect to also have alerts sent whilst connected by a cellular connection 22, so that he can seek an opportunity to move to a wireless access enabled area 27 to receive the text message itself.

The messaging system may also have the capability to transmit text messages over the conventional GSM connection 22 in certain circumstances, for example if the destination terminal 12 is of a type recorded in the HLR 4 as not being internet-compatible, or if the message has been flagged as a premium-rated urgent message, or if the text message has been stored in the SMSC for more than a predetermined time.

In some systems the user may connect to the system using different terminals at different times, and some such terminals may not have a text capability: for example the internet connection 8 may lead to a standard fixed telephone using Voice over Internet Protocol (VOIP) technology. The messaging system handles this by considering the terminal 12 as part of the connection, and preventing transmission of the text message if any part of the connection is not capable of carrying text messaging.

## Description

This invention relates to messaging services.

It is known to provide a facility in a telephone system to allow a data message to be sent to another party. The well-known text messaging or SMS system provided on the GSM cellular network system is an example of such a service. In this system, a caller generates a data message which is transmitted to the destination user's network operator, where the message is stored until the user retrieves it. The user is sent an alert message to indicate that a message has been received. If the user terminal is not currently connected to the network, for example because the terminal is switched off, this alert is sent when the network next establishes contact with the user.

The invention may also be used for other forms of one-way data transfer, where it is not necessary for the calling party to wait for the called party to be available.

A problem may arise if the text message is sent to a destination that is not equipped to handle such messages. This can occur for a number of reasons. For example, the destination number may be for a network not equipped for data messaging, for example a traditional fixed telephone network. (Some traditional networks do now provide text-to-voice conversion systems, but this may not be appropriate if the data is required to be received in text format, for example to control a device at the destination). Another problem may occur if the destination user has a mobility system allowing calls to be sent to a number of available terminals, only some of which have text message capability. These destination terminals may be connected to different networks, some of which may not support text messaging, or may charge prohibitively high rates to do so.

According to the present invention, there is provided a data transmission facility for a telecommunications system, having means for detecting a data transmission made by a first party and destined for a second party, means for storing the transmitted data until retrieved by the second party, means for detecting destination characteristics of the second party, and means for enabling retrieval of the data message when the destination characteristics meet predetermined criteria.

The system can then define a class of destination to which data messages should be forwarded, and transmit such messages only when the user is reachable through a destination falling within that class. An alert may be sent to the user, whether or not he is currently connected through a destination falling within the specified class, to give the user an opportunity to switch to an appropriate destination if that is possible.

The destination class may be specified by terminal type, network connection type, or any other category. Thee may also be other criteria, such as time-dependancy, such that the class may be defined to include different destination types at different times to allow a user to avoid or take advantage of variable tariffs, or to change the criteria as the urgency of the message varies with time.

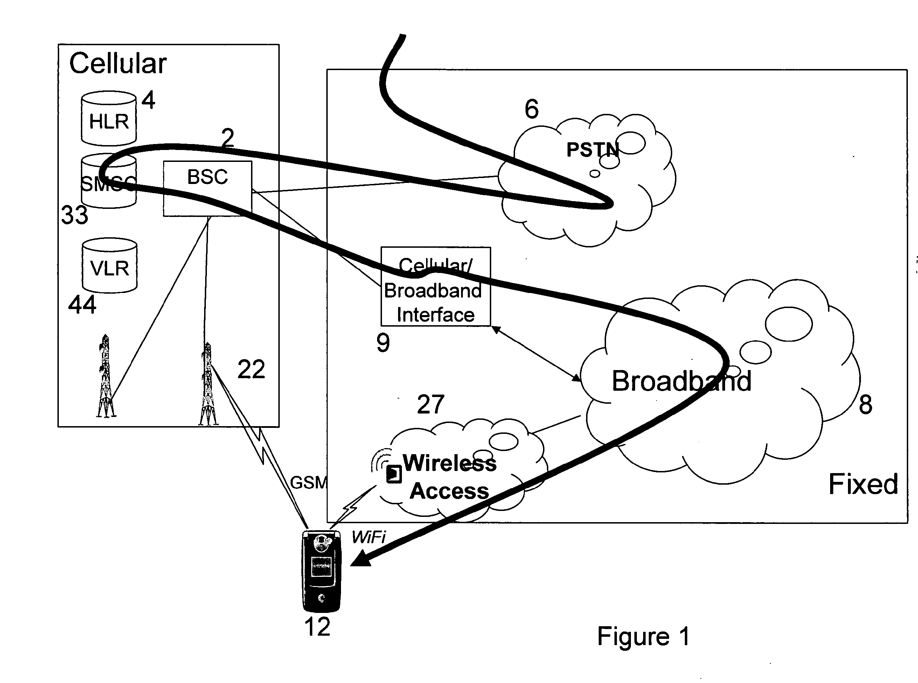

An embodiment of the invention will now be described by way of example, with reference to the sole drawing, which is a schematic diagram of a communications system embodying the invention.

The Figure depicts a cellular (GSM) network 2 connected to both a telephone network 6 and, through an interface 9, to the internet ("broadband") 8. The telephone network 6 may be a circuit-switched system such as the PSTN (public switched telephone network), or a packet switched system such as VOIP (Voice over Internet Protocol). User terminals 12 may be connected to the telephone network 6 through either a cellular connection 22 to the cellular network 2, or through the internet 8 - as depicted in the Figure both access routes are wireless, the internet connection being by way of a "WiFi" wireless access connection 27.

In the described embodiment, the terminal 12 is registered with the cellular telephone network 2, and therefore location information for handling incoming calls is held by a home location register (HLR) 4 and a visitor location register 44 of the cellular network 2 in known manner. The VLR 44 monitors the location of the handset 12, so that calls arriving in the switched system 2 can be routed to the terminal 12 directly by the cellular connection 22, or by the internet route 8,27, depending on which system is currently in communication with the handset. Typically the cellular system 2 is more limited in capability, (and particularly bandwidth) but has more ubiquitous coverage, so the internet connection 8 is used when available, with the cellular system 2 only used if the handset is at a location where no internet connection 8 is available. This allows voice and other "real-time" connections to be made using the optimum system available at the time required. However, data messages, such as text messaging, do not need to be sent in real time - it is possible to transmit a text message to a user who is not currently connected to the network, as the data message is stored until the user retrieves it.

The handling of incoming text messages will now be discussed. An incoming text message is routed by way of the telephone network 6. As the destination directory number is associated with the cellular network 2, being stored in the HLR 4, the message is routed to the cellular network 2, and specifically to a text messaging centre (SMSC) 33 associated with the network 2. (The HLR 4 carries permanent data relating to the user 12, as well as a record of the VLR 44 with which the terminal 12 is currently (or most recently) associated and therefore where the call should be routed, thereby allowing the handset to roam between coverage areas of different VLRs). In this embodiment, if the handset is currently connected to the internet connection 8, the interface 9 between the cellular network and the internet is recorded in the VLR as the location of the handset, and further routing (e.g. to the wireless access connection 27) is handled by internet protocols.

The incoming text message is stored in the SMSC 33 and a paging signal is transmitted to the handset 12. The routing of the paging signal is determined according to location information stored in the visitor location register 44. Paging signals may be repeated if the message is not retrieved within a certain period. If the handset 12 is currently not locatable (for example because it is switched off or out of radio range) a paging signal is sent when the handset 12 next registers with the network 2.

In the present invention, the SMSC 33 is arranged to withhold delivery of text messages stored therein unless the destination handset 12 is registered with a specified subset of locations: specifically the interface 9 to the internet 8. The system may be configured to only deliver alert messages when the handset 12 is connected to the internet 8. However, a user may elect to also have alerts sent whilst connected by a cellular connection 22, so that he can seek an opportunity to move to a wireless access enabled area 27 to receive the text message itself.

The SMSC may also have the capability to transmit text messages over the conventional GSM connection 22 in certain circumstances, for example if the destination terminal 12 is of a type recorded in the HLR 4 as not being internet-compatible, or if the message has been flagged as a premium-rated urgent message, or if the text message has been stored in the SMSC for more than a predetermined time.

In some systems the user may connect to the system using different terminals at different times, and some such terminals may not have a text capability: for example the internet connection 8 may lead to a standard fixed telephone using voice over Internet Protocol (VOIP) technology. The SMSC handles this by considering the terminal 12 as part of the connection, and preventing transmission of the text message if any part of the connection is not capable of carrying text messaging.

Some fixed telephone systems have a means within the interface 9 between the fixed and cellular systems 8, 2 for converting text messages into synthesised voice messages. The user 12 and/or sender of the message may select whether such conversion should be done, and thus whether the SMSC 33 should allow transmission of the text message through such a synthesiser.

## Claims

1. A data transmission facility for a telecommunications system, having means for detecting a data transmission made by a first party and destined for a second party, means for storing the transmitted data until retrieved by the second party, means for detecting destination characteristics of the second party, and means for enabling retrieval of the data message when the destination characteristics meet predetermined criteria.

2. A data transmission facility according to claim 1, having means to define a class of destination to which data messages should be forwarded, and transmit such messages only when the second party is reachable through a destination falling within that class.

3. A telecommmunications system according to claim 2, wherein the class is defined according to the type of terminal in use at the destination.

4. A data transmission facility according to claim 2 or claim 3, wherein the class is defined by the type of connection by which the destination terminal is connected to the network.

5. A data transmission facility according to any preceding claim, having alert generation means for sending an alert signal to a destination terminal when data addresse to that destination is stored in the storage means, wherein the alert generation means is arranged to transmit an alert to the destination terminal whether or not it is currently connected through a destination falling within the specified class.

6. A data transmission facility according to claim 1, claim 2, claim 3, or claim 4, having alert generation means for sending an alert signal to a destination terminal when data addressed to that destination is stored in the storage means, wherein the alert generation means is arranged to transmit an alert to the destination terminal only when it is currently connected through a destination falling within the specified class.

7. A data transmission facility according to any preceding claim, providing over-ride means to allow modification of the criteria under which data may be retrieved.

8. A data transmission facility according to claim 7, wherein the over-ride means are controlled by the presence of absence of a flag in the incoming data message.

9. A method of operating a data transmission facility of a telecommunications system, wherein a data transmission is received from a first party and stored for subsequent retrieval by a second party, and such retrieval is enabled when destination characteristics of the second party are determined to meet predetermined criteria.

10. A method according to claim 9, wherein a class of destination to which data messages should be forwarded is defined, such messages are onlt transmitted only if the second party is reachable through a destination falling within that class.

11. A method according to claim 10, wherein the class is defined according to the type of terminal in use at the destination.

12. A method according to claim 10 or claim 11, wherein the class is defined by the type of connection by which the destination terminal is connected to the network.

13. A method according to claim 9, claim 10, claim 11 or claim 12, wherein an alert signal is sent to a destination terminal when data addressed to that destination is stored in the storage means, whether or not it is currently connected through a destination falling within the specified class.

14. A method according to claim 9, claim 10, claim 11 or claim 12, wherein an alert signal is sent to a destination terminal when data addressed to that destination is stored in the storage means only when it is currently connected through a destination falling within the specified class.

15. A method according to claim 9, claim 10, claim 11, claim 12, claim 13 or claim 14, wherein the criteria under which data may be retrieved may be modified by the presence of absence of a flag in the incoming data message.
